Europäisches Patentamt

European Patent Office

Office européen des brevets

(19)

(11) Numéro de publication : **0 140 776**
**B1**

(12) **FASCICULE DE BREVET EUROPÉEN**

(45) Date de publication du fascicule du brevet :
**23.12.87**

(21) Numéro de dépôt : **84402057.8**

(22) Date de dépôt : **12.10.84**

(51) Int. Cl.⁴ : **B 21 B 37/00**, F 16 C 13/00,
D 21 G 1/02, B 21 B 37/08

(54) Procédé de réglage en cours de laminage de l'épaisseur et du profil d'un produit laminé.

(30) Priorité : **14.10.83 FR 8316341**

(43) Date de publication de la demande :
**08.05.85 Bulletin 85/19**

(45) Mention de la délivrance du brevet :
**23.12.87 Bulletin 87/52**

(84) Etats contractants désignés :
**AT BE CH DE GB LI LU NL**

(56) Documents cités :
**DE-A- 3 101 115**
**DE-B- 2 510 410**
**FR-A- 2 423 582**
**FR-A- 2 504 951**
**GB-A- 2 068 482**
**GB-A- 2 091 150**
**GB-A- 2 091 448**

(73) Titulaire : **CLECIM**
**107 boulevard de la Mission Marchand**
**F-92400 Courbevoie (FR)**

(72) Inventeur : **Morel, Michel**
**4 bis avenue André Chénier**
**F-77500 Chelles (FR)**
Inventeur : **Valence, Marc**
**14 avenue Dubonnet**
**F-92400 Courbevoie (FR)**

(74) Mandataire : **Le Brusque, Maurice et al**
**Cabinet Harlé et Phélip 21, rue de la Rochefoucauld**
**F-75009 Paris (FR)**

EP 0 140 776 B1

## Description

L'invention concerne un procédé de réglage de l'épaisseur et du profil d'un produit plat en cours de laminage, tel qu'une tôle ou un feuillard, en cours de transformation dans un laminoir à chaud ou à froid.

Pour obtenir un réglage efficace du profil d'une tôle en cours de laminage dans une cage de laminoir, on peut modifier le cambrage ou le bombement des cylindres de cette cage, en fonction d'une mesure de la planéité de la tôle dans sa direction transversale.

Dans le cas d'une cage comportant plus de deux rouleaux superposés, par exemple une cage quarto comportant deux cylindres d'appui et deux cylindres de travail, on peut modifier le bombement ou le cambrage des cylindres d'appui ou des cylindres de travail ou simultanément le bombement ou le cambrage des cylindres d'appui et des cylindres de travail. La modification du bombement d'un cylindre de laminoir peut être obtenue en introduisant un fluide sous pression dans un espace réservé entre l'enveloppe tubulaire externe du cylindre et le support de celui-ci. Cependant, le bombement d'un tel cylindre qui ne dépend que de la pression du fluide ne permet pas de corriger les défauts du profil transversal de la bande dans tous les cas. Ces défauts peuvent être déterminés de façon précise par un dispositif de mesure de planéité associé au laminoir. Un tel dispositif de mesure de planéité comporte généralement un rouleau transversal par rapport à la bande qui permet de déterminer par exemple les variations de la tension dans la bande, suivant la direction transversale. Ces variations transversales de la tension dans la bande traduisent des variations de l'allongement et de l'épaisseur de la bande.

On a donc proposé des cylindres de laminoir à bombement variable permettant d'adapter le bombement au défaut d'épaisseur mesuré dans la direction transversale de la bande. De tels rouleaux comportent un support fixe en appui sur le bâti de la cage du laminoir et une enveloppe tubulaire montée rotative autour du support fixe, de façon qu'un espace soit ménagé entre le support fixe et la surface interne de l'enveloppe tubulaire. Les efforts exercés sur le cylindre pendant le laminage sont repris grâce à des vérins dont la chambre est solidaire du support fixe et dont les pistons de direction radiale par rapport aux rouleaux comportent à leur extrémité dirigée vers la surface interne de l'enveloppe, une chambre recevant le fluide sous pression alimentant le vérin. On constitue ainsi entre le piston de chaque vérin et la surface intérieure de l'enveloppe, un film de fluide sous pression constituant un palier sur lequel repose l'enveloppe tubulaire.

Les vérins sont alignés dans la direction axiale du rouleau correspondant à la direction transversale de la tôle et sont régulièrement espacés dans cette direction. Ces vérins peuvent être alimentés en fluide sous pression de façon indépendante, ce qui permet de contrôler le bombement du cylindre de façon extrêmement précise, suivant la longueur du rouleau.

Ce contrôle du bombement est obtenu en réglant la pression du fluide dans les différents vérins, en fonction des indications de jauges d'épaisseur réparties suivant la direction transversale de la tôle à la sortie de la cage de laminoir.

Un tel procédé qui est décrit par exemple dans le brevet français n° 2 360 713 ne permet cependant pas d'atteindre une très grande précision quant au réglage d'épaisseur et une stabilité suffisante au cours du réglage puisque les déformations données à l'enveloppe par les différents vérins interfèrent les unes avec les autres. On ne profite donc pas pleinement des avantages que devrait apporter un dispositif à réglage précis du bombement.

Le but de l'invention est donc de proposer un procédé de réglage, en cours de laminage, de l'épaisseur et du profil d'un produit laminé dans une cage de laminoir comportant au moins un cylindre constitué par un support fixe en appui sur le bâti de la cage de laminoir et une enveloppe tubulaire en contact avec le produit laminé ou avec un autre rouleau, suivant une génératrice de contact, montée rotative autour du support fixe et dont le diamètre intérieur est tel qu'un espace est ménagé entre le support et l'enveloppe qui est maintenu contre les efforts de laminage par au moins trois vérins espacés suivant la direction axiale du rouleau correspondant à la direction transversale du produit plat et comportant chacun une chambre solidaire du support fixe et un piston dirigé radialement constituant, à son extrémité dirigée vers la surface interne de l'enveloppe du rouleau, au moins une chambre recevant le fluide sous pression du vérin pour constituer un film d'huile permettant la rotation de l'enveloppe par glissement sur ce film, ce procédé de réglage devant permettre d'obtenir un produit plat d'épaisseur constante au cours du temps et uniforme dans la direction transversale, avec une grande stabilité de fonctionnement, procédé dans lequel on mesure en continu la pression du fluide dans chacun des vérins, la vitesse de rotation du cylindre, la planéité du produit laminé dans la direction transversale et l'épaisseur du produit plat dans une zone située transversalement à une certaine distance des bords de ce produit plat.

Dans ce but, de façon continue pendant le laminage du produit plat :

— on mesure la position des pistons de chacun des vérins,

— on asservit la position du piston du vérin disposé le plus près de la zone de mesure d'épaisseur, à la mesure d'épaisseur,

— on asservit la pression du fluide dans les autres vérins à la pression du vérin asservi en position,

— on compare la position des deux vérins situés dans des positions transversales extrêmes pour déterminer le basculement du cylindre,

— on modifie la pression dans les vérins de façon à amener le basculement à une valeur de référence déterminée par la mesure de planéité transversale,

— on calcule la déformation du support fixe à partir des pressions mesurées dans chacun des vérins et des caractéristiques mécaniques et dimensionnelles du support fixe,

— on détermine, à partir de la déformation du support fixe et de la position des pistons des vérins la forme de la génératrice de contact du cylindre,

— et l'on modifie la pression dans les vérins pour faire coïncider la forme de cette génératrice de contact avec une forme de référence déterminée à partir de la mesure de planéité transversale.

Afin de bien faire comprendre l'invention, on va maintenant décrire à titre d'exemple non limitatif, un exemple de mise en œuvre du procédé de réglage suivant l'invention dans le cas d'un laminoir quarto dont un des cylindres d'appui est à bombement variable.

La figure 1 est une vue de dessus schématique de la cage de laminoir et des dispositifs de mesure qui y sont associés.

La figure 2 est une vue en coupe suivant AA de la figure 1.

La figure 3 est une vue en coupe par son plan de symétrie vertical, du rouleau d'appui à bombement variable de la cage de laminoir représentée aux figures 1 et 2.

La figure 3a est une vue en coupe suivant AA de la figure 3.

La figure 4 est une représentation schématique de l'ensemble de commande et de réglage de la cage de laminoir représentée aux figures 1 et 2.

La figure 5 est une vue partielle en coupe par un plan transversal du cylindre à bombement variable montrant les dispositifs de mesure de la pression et de la position du piston.

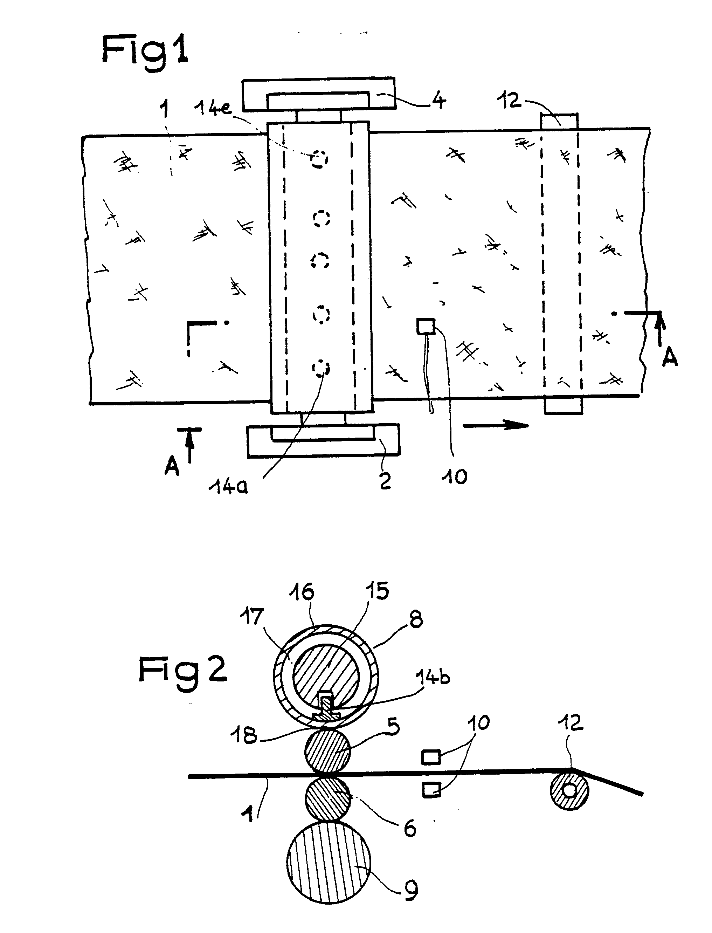

Sur les figures 1 et 2, on voit une bande 1 de métal en cours de laminage dans une cage de laminoir 2 de type quarto. Cette cage comporte dans un bâti 4 deux cylindres de travail 5 et 6 et deux cylindres d'appui 8 et 9.

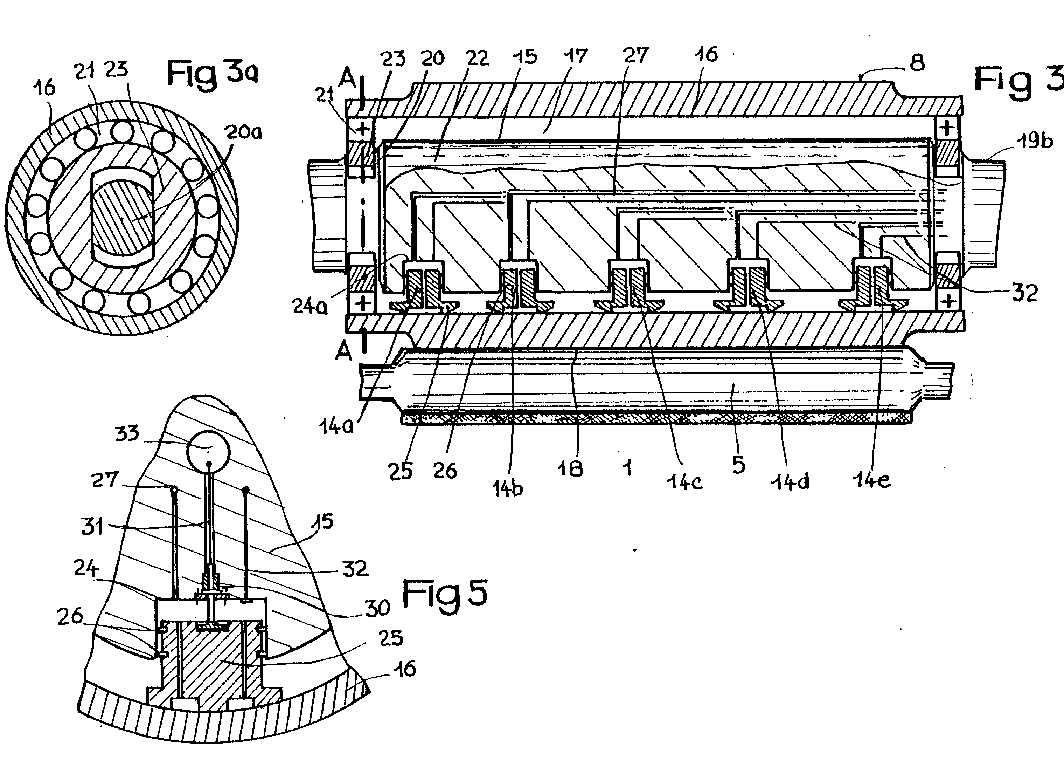

Le cylindre d'appui 8 est du type à bombement variable et sera décrit plus en détail en se référant à la figure 3.

A la sortie de la cage de laminoir est disposée une jauge de mesure d'épaisseur 10 qui fournit à tout instant un signal proportionnel à l'épaisseur de la bande 1 à la sortie du laminoir.

La bande 1 passe ensuite sur un rouleau de planéité 12 qui peut être du type décrit dans la demande de brevet n° 2 468 878 de la Société CLECIM dans le cas du laminage à froid d'une bande de tôle. Un tel rouleau de planéité permet de déterminer les valeurs de la tension dans la bande suivant sa largeur, c'est-à-dire suivant la direction axiale du rouleau de planéité ou des cyclindres de la cage de laminoir.

Comme il est visible sur la figure 2, les cylindres de travail 5 et 6 et le cyclindre d'appui 9 de la cage de laminoir sont constitués de manière usuelle par des cylindres massifs. En revanche, le cylindre d'appui 8 est à bombement variable et comporte un support cylindrique 15 en appui sur le bâti 2 du laminoir et une enveloppe tubulaire 16 dont le diamètre intérieur est tel qu'un espace annulaire 17 subsiste entre l'enveloppe 16 et le support 15. Cette enveloppe 16 est maintenue en appui contre le cylindre supérieur de travail 5 suivant une génératrice de contact 18, par l'intermédiaire de cinq vérins 14 alignés et régulièrement espacés dans la direction axiale du cylindre d'appui 8 correspondant à la direction transversale de la bande 1 en cours de laminage.

On va maintenant se reporter aux figures 3 et 3a pour décrire plus en détail le rouleau supérieur d'appui 8.

Le support intérieur fixe 15 comporte deux bouts d'arbre 19 pour le montage du rouleau d'appui dans le support 2 de la cage de laminoir, deux portées de palier 20 et un corps cylindrique 22. L'enveloppe tubulaire 16 est montée rotative sur les portées de palier 20 par l'intermédiaire de paliers à rouleaux 21 et d'une pièce intermédiaire 23 comportant une ouverture centrale à l'intérieur de laquelle est engagée la partie 20 du support 15. La pièce 23 est montée sur la portée de palier 20 de façon à permettre un certain débattement de cette pièce 23, du palier 21 et de l'enveloppe 16, dans la direction verticale par rapport au support fixe 15. Le montage du cylindre 8 est identique à ses deux extrémités.

Le corps 22 du support fixe 15 est percé de cinq cavités 24 constituant chacune la chambre d'un des vérins 14.

Les chambres 24 des vérins 14 sont alimentées chacune de façon indépendante en huile sous pression par un canal axial 27.

Ces canaux 27 débouchent à l'extrémité du bout d'arbre 19b sur laquelle sont fixées cinq conduites alimentant chacune un canal 27.

Chacun des pistons 25 comporte une tige montée étanche grâce à des joints 26 et mobile dans la direction radiale à l'intérieur de la chambre 24 correspondante. A leur extrémité située vers la surface intérieure de l'enveloppe tubulaire 8, les pistons comportent une partie évasée formant deux chambres qui sont mises en communication avec la chambre 24 par deux canaux de très faible diamètre traversant la tige du piston 25.

De cette façon, lorsqu'on alimente en huile sous pression la chambre 24, le piston est déplacé radialement et une petite partie de l'huile pénètre par les canaux du piston 25 dans les chambres situées au voisinage de la surface intérieure de l'enveloppe annulaire 16. De cette façon, on provoque la formation d'un film d'huile sous pression entre l'extrémité du vérin 25 et la surface intérieure de l'enveloppe 8. La poussée des vérins 14 peut s'exercer sur l'enveloppe 16 qui reste néanmoins mobile en rotation autour du support fixe 15 grâce aux paliers fluides constitués par les chambres d'extrémité des pistons 25 des vérins 14.

L'action des vérins 14 permet de régler la forme et la position de la génératrice de contact 18 entre le cylindre d'appui 8 et le cylindre de travail 5. Le réglage de la position et de la forme de cette génératrice de contact 18 permet à son tour de régler la position et la forme de la génératrice de contact du cylindre de travail avec la tôle en cours de laminage et donc le profil et l'épaisseur de cette tôle.

Sur la figure 5, on voit la partie inférieure du cylindre 8, au voisinage d'un vérin 14 dont la chambre 24 est alimentée par un conduit 27 de fluide sous pression. Dans la chambre 24, débouche également une ligne de mesure de pression 32 reliée à un capteur de pression disposé dans la chambre 24 et ressortant du cylindre 8 par son extrémité 19b comme les conduits 27 d'alimentation en fluide sous pression.

Le piston 25 du vérin est relié à la tige d'un capteur de position 30 disposé dans l'axe du vérin 14. Une ligne de mesure 31 reliée au capteur de position 30 débouche dans un conduit axial 33 usiné dans le support 15 du cylindre 8. Les signaux de mesure de position sont transmis à l'intérieur du conduit 33, par des lignes de mesure 31, à l'une des extrémités du support 15 du cylindre 8.

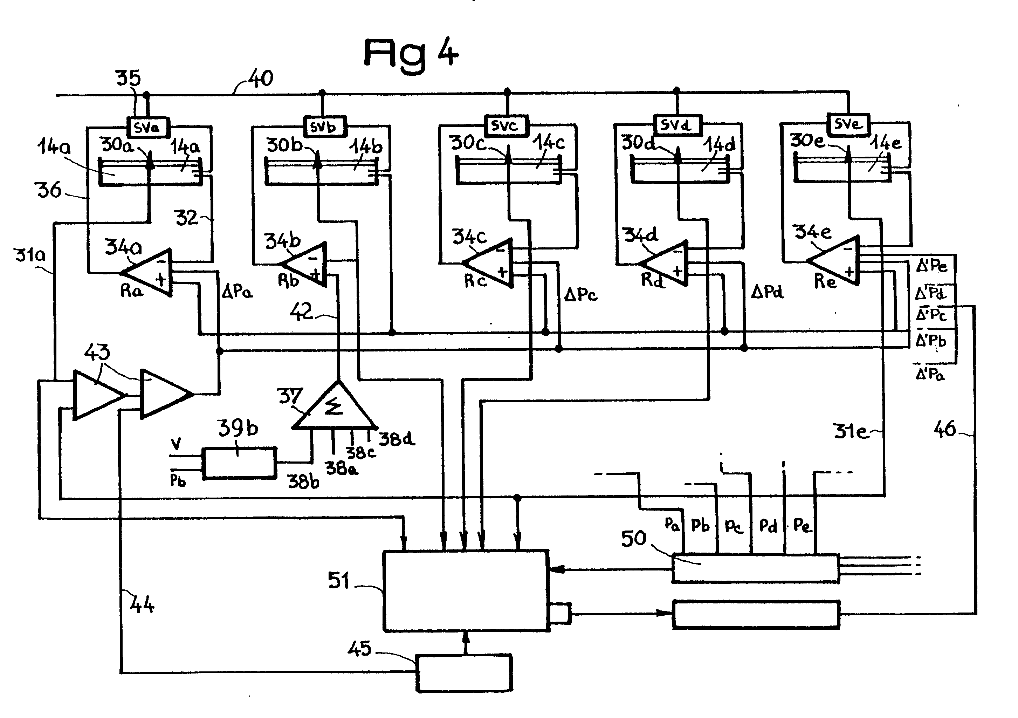

Sur la figure 4, on a représenté l'ensemble des éléments de commande permettant de régler la forme et la position de la génératrice 18 et donc le profil de l'épaisseur de la tôle 1.

Sur la figure 4, on a représenté de façon très schématique les cinq vérins 14a, 14b, 14c, 14d et 14e du rouleau d'appui 8. Comme décrit ci-dessus, en se référant à la figure 5, à chacun de ces vérins est associé un capteur de pression permettant de connaître de façon continue la pression dans la chambre 24 du vérin et un capteur de position placé à la partie centrale du piston 25 du vérin permettant de déterminer de façon extrêmement précise la position du piston du vérin à chaque instant. Le signal représentatif de la position du piston du vérin est recueilli sur le capteur de position 30 par la ligne de mesure 31. La mesure de pression est transmise par la ligne de mesure 32 à un régulateur 34 qui transmet la consigne de pression, par une ligne 36, à une servovalve 35 permettant l'alimentation du vérin à la pression voulue, la servovalve 35 étant intercalée entre le canal d'alimentation 40 du vérin et la chambre de celui-ci.

Chacun des vérins 14 comporte donc une boucle de régulation de pression, pour son réglage en continu pendant le fonctionnement du laminoir.

En réalité, les vérins ne sont pas régulés en pression à partir d'une consigne fournie, par exemple, par une mesure d'épaisseur, comme dans les dispositifs de l'art antérieur dont les inconvénients ont été signalés.

Les vérins 14a, 14c, 14d et 14e comportent une boucle de régulation de pression telle qu'on vient de la décrire alors que le vérin 14b est régulé en position en fonction des indications de la jauge d'épaisseur 10. Cette jauge 10 est disposée transversalement, par rapport à la bande, dans une position équivalente à la position du vérin 14b.

Pour le réglage en position de la tige de ce vérin 14b, le régulateur 34b reçoit un signal de position par une ligne 42 qui est comparé au signal représentatif de la mesure de position de la tige du vérin transmis par la ligne de mesure 31.

Le signal résultant permet de commander la servovalve 35b pour l'alimentation du vérin qui est ainsi réglé en position.

Le signal de régulation transmis par la ligne 42 provient d'un régulateur 37 recevant, comme entrée, le signal de la jauge d'épaisseur 38a, la référence d'épaisseur 38b, un signal représentatif du cédage de la cage du laminoir 38c et un signal représentatif de l'épaisseur du film d'huile 38d. Le signal représentatif de l'épaisseur du film d'huile 38d est élaboré dans une unité de calcul 39b recevant comme entrée la vitesse de rotation du cylindre 8 qui est mesurée en continu et le signal représentatif de la pression dans le vérin 14b qui est prélevé sur la ligne de mesure 32b.

L'ensemble des données fournies au régulateur 37 permet de déterminer la position du piston du vérin 14b pour respecter la consigne d'épaisseur avec une très grande précision, de l'ordre de un micron.

Le signal représentatif de la pression dans le vérin 14b est transmis par la ligne de mesure 32b à chacun des régulateurs 34a, 34c, 34d et 34e, comme valeur de consigne.

Les vérins 14a, 14c, 14d et 14e sont donc asservis à la pression du vérin 14b lui-même régulé en position.

Il en résulte une bonne stabilité de la régulation de ces vérins.

Les signaux représentatifs de la position des pistons des vérins 14a et 14e sont transmis par les lignes de mesure 31a et 31e à un régulateur numérique 43 qui permet d'obtenir un signal représentatif de la différence de ces deux signaux de position qui est lui-même comparé à une référence élaborée par l'unité de calcul 45 du dispositif de mesure de planéité.

Ce signal représentant la différence des signaux de position des vérins extrêmes est représentatif du basculement transversal de l'enveloppe du cylindre d'appui 8, c'est-à-dire de l'inclinaison de la génératrice 18 par rapport à l'horizontale.

Le signal de référence transmis par une ligne de mesure 44 au régulateur 43 correspond à la valeur souhaitable du basculement du cylindre d'appui 8 pour corriger les différences de tension entre les deux bords de la tôle. Ces tensions sont mesurées par le dispositif de mesure de planéité dont l'unité de calcul permet de déterminer la correction du basculement en fonction de la différence de tension.

Le signal de sortie du régulateur 43 se présente sous la forme d'un signal complexe représentatif des corrections de pression $\Delta Pa$, $\Delta Pc$, $\Delta Pd$ et $\Delta Pe$ des vérins correspondants, pour obtenir la correction du basculement. Les signaux représentatifs de ces corrections de pression sont envoyés sur les régulateurs correspondants 34a, 34c, 34d et 34e.

Les signaux représentatifs des pressions Pa, Pb, Pc, Pd et Pe dans les différents vérins sont prélevés sur les lignes de mesure 32 et sont envoyés à une unité de calcul 50 qui reçoit également comme données d'entrée les données relatives aux caractéristiques dimensionnelles et mécaniques du support fixe 15 du rouleau d'appui 8.

L'unité de calcul 50 élabore un ensemble de signaux représentatifs de la flexion du support fixe 15 au niveau de chacun des vérins. Les calculs de déformation du support fixe peuvent être effectués connaissant les caractéristiques mécaniques et dimensionnelles du support et les efforts appliqués par les différents vérins, proportionnels aux pressions du fluide dans ces vérins.

Les signaux représentatifs des flexions du support fixe et les signaux représentatifs des positions des pistons des différents vérins sont transmis à une unité de calcul et de régulation 51 constituant un régulateur numérique qui permet de déterminer les positions absolues des pistons des vérins, de l'enveloppe 15 du cylindre 8 et de la génératrice de contact. L'unité de calcul 51 permet donc de déterminer de façon extrêmement précise la forme exacte de la génératrice de contact 18 du cylindre d'appui.

Les valeurs de la tension dans la bande mesurées par le dispositif de mesure de planéité 45 sont transmises à l'unité de calcul 51 qui détermine le bombé de référence du cylindre 8, nécessaire pour la correction de planéité, étant donné les indications du dispositif 45. La courbe de bombé mesuré correspondant à la forme de la génératrice 18 et le bombé de référence sont comparés dans l'unité de calcul 51 qui élabore des signaux représentatifs des corrections de pression Δ'Pa, Δ'Pb, Δ'Pc, Δ'Pd et Δ'Pe à appliquer aux différents vérins pour ramener le bombé à sa forme de référence.

Les signaux représentatifs des corrections de pression sont transmis par une ligne 46 aux régulateurs 34 correspondants.

La détermination précise de la position de l'enveloppe du rouleau d'appui et de sa génératrice de contact nécessite que l'unité de calcul 51 prenne en compte les calculs d'épaisseur du film d'huile obtenu dans les unités de calcul 39.

On obtient ainsi à chaque instant une mesure extrêmement précise de la forme de la génératrice qui peut être amenée à une forme correspondant à la forme nécessaire pour la correction de la planéité.

Les principaux avantages du procédé décrit sont donc de permettre une régulation d'épaisseur avec une très bonne précision, de l'ordre de 1 % de l'épaisseur nominale, une planéité constamment contrôlée grâce au contrôle de la forme de la génératrice de contact entre le cylindre d'appui et le cylindre de travail et un fonctionnement d'une très grande stabilité.

L'invention ne se limite pas au mode de réalisation qui a été décrit ; elle en comporte au contraire toutes les variantes.

C'est ainsi qu'on peut mesurer la planéité de la bande par une méthode quelconque, si cette méthode est d'une sensibilité et d'une précision suffisante. De même, on pourra choisir une jauge d'épaisseur d'un type quelconque permettant d'assurer une précision suffisante.

On peut même effectuer le réglage d'épaisseur et de profil de la tôle sans avoir recours à une jauge d'épaisseur et à un rouleau de planéité, par exemple lorsque cette jauge ou ce rouleau de planéité sont momentanément indisponibles par suite de panne ou d'avarie. Pour cela, un opérateur intervient pour introduire manuellement, depuis le pupitre de commande du laminoir, une valeur de référence de l'épaisseur dans la boucle de régulation de position du vérin asservi en position, une valeur de référence de l'inclinaison de la génératrice de contact et une forme de référence de cette génératrice choisie en fonction des corrections de profil à réaliser, dans les boucles correspondantes de correction de la pression des vérins.

La disposition des capteurs de position et de pression sur les différents vérins peut être différente de celle qui a été décrite.

De façon générale, le procédé décrit peut utiliser des moyens de mesure, de calcul ou de régulation déjà utilisés dans les laminoirs selon l'art antérieur, par exemple pour la détermination de l'épaisseur de la tôle, du cédage de la cage de laminoir ou de la position des pistons des vérins. Dans certains cas, il est possible d'effectuer le réglage d'épaisseur et de planéité sans tenir compte des variations de l'épaisseur du film de liquide sous pression.

En effet, ce film peut avoir une épaisseur constante quelles que soient la pression du fluide et la vitesse de rotation du cylindre, si son comportement demeure hydrostatique. Dans ce cas, on n'effectuera pas le calcul de l'épaisseur du film introduisant une correction d'amplitude variable dans le calcul de la position du vérin réglé en position et dans la détermination de la forme de la génératrice de contact.

De même, dans certains cas, en fonction de la rigidité de la cage et de la précision demandée sur l'épaisseur de la tôle, il n'est pas nécessaire de déterminer le cédage de la cage de laminoir pour régler la position du vérin choisi pour obtenir le réglage d'épaisseur.

Dans le cas où les efforts de laminage sont importants, on utilisera plusieurs ensembles espacés axialement, de deux vérins dont les chambres et les pistons de direction radiale par rapport au rouleau sont disposés de façon à faire un angle α aigu. Ces ensembles de deux vérins sont équivalents chacun à un vérin unique dans la position du piston à chaque instant peut être déterminée à partir des positions des pistons des deux vérins disposés angulairement et de l'angle α que font ces deux vérins.

On effectuera donc, en continu, un calcul de la position du piston du vérin équivalent à chaque ensemble de deux vérins. Cette valeur calculée de la position du vérin équivalent sera utilisée, à la place de la valeur de position des pistons des vérins 14 dans l'exemple décrit ci-dessus, pour toutes les étapes du procédé où cette valeur de la position des vérins est utilisée.

On pourra appliquer le procédé suivant l'invention dans des cages comportant indifféremment un ou plusieurs cylindres à bombement variable du type décrit.

On pourra également appliquer le procédé suivant l'invention sur plusieurs cages successives d'un laminoir à plusieurs cages ou uniquement sur la cage de sortie de ce laminoir.

Enfin, le procédé décrit s'applique au laminage de toutes tôles ou feuillards en matériaux ferreux ou non-ferreux.

## Revendications

1. Procédé de réglage, en cours de laminage, de l'épaisseur et du profil d'un produit laminé tel qu'une tôle ou un feuillard dans une cage de laminoir comportant au moins un cylindre (8) constitué par un support fixe (15) en appui sur le bâti (2) de la cage de laminoir et une enveloppe tubulaire (16) en contact avec le produit laminé (1) ou avec un autre cylindre (5) suivant une génératrice de contact (18) montée rotative autour du support fixe (15) et dont le diamètre intérieur est tel qu'un espace est ménagé entre le support (15) et l'enveloppe (16) qui est maintenue contre les efforts de laminage par au moins trois vérins (14) espacés suivant la direction axiale du cylindre correspondant à la direction transversale du produit laminé (1) et comportant chacun une chambre (24) solidaire du support fixe (15) et un piston (25) dirigé radialement constituant, à son extrémité dirigée vers la surface interne de l'enveloppe (16) du cylindre, au moins une chambre recevant le fluide sous pression du vérin (14) pour constituer un film d'huile permettant la rotation de l'enveloppe (16) par glissement sur ce film, procédé dans lequel on mesure en continu la pression du fluide dans chacun des vérins (14), la vitesse de rotation du cylindre (8), la planéité du produit laminé (1) dans la direction transversale et l'épaisseur du produit laminé (1) dans une zone située transversalement à une certaine distance des bords du produit plat (1), caractérisé par le fait que, de façon continue pendant le laminage du produit laminé (1) :

on mesure la position des pistons (25) de chacun des vérins (14),

on asservit la position du piston du vérin (14b) disposé le plus près de la zone de mesure d'épaisseur (10), à la mesure d'épaisseur,

on asservit la pression du fluide dans les autres vérins (14a, 14c, 14d, 14e) à la pression du vérin (14b) asservi en position,

on compare la position des deux vérins (14a) et (14e) situés dans des positions transversales extrêmes pour déterminer le basculement du cylindre (8),

on modifie la pression dans les vérins (14) de façon à amener le basculement à une valeur de référence déterminée par la mesure de planéité transversale,

on calcule la déformation du support fixe (15) à partir des pressions mesurées dans chacun des vérins (14) et des caractéristiques mécaniques et dimensionnelles du support fixe (15),

on détermine, à partir de la déformation du support fixe (15), et de la position des pistons (25) des vérins (14), la forme de la génératrice de contact (18) du cylindre,

et l'on modifie la pression dans les vérins (14) pour faire coïncider la forme de cette génératrice de contact (18) avec une forme de référence déterminée à partir de la mesure de planéité transversale.

2. Procédé de réglage suivant la revendication 1, caractérisé par le fait qu'on calcule en outre l'épaisseur du film de fluide sous pression entre chacun des pistons (25) des vérins (14) et l'enveloppe (16) du cylindre (8), en fonction de la vitesse de rotation du cylindre (8) et de la pression du fluide dans le vérin (14) correspondant et qu'on prend en compte cette valeur calculée de l'épaisseur du film de fluide pour l'asservissement en position du vérin (14b) situé le plus près de la zone (10) de mesure d'épaisseur du produit laminé (1) et pour la détermination de la forme de la génératrice de contact (18) du cylindre (8).

3. Procédé de réglage suivant l'une quelconque des revendications 1 et 2, caractérisé par le fait qu'on calcule en outre le cédage de la cage de laminoir comportant le cylindre (8) et qu'on prend en compte cette valeur calculée du cédage pour l'asservissement en position du vérin (14b) situé le plus près de la zone (10) de mesure d'épaisseur du produit laminé (1).

4. Procédé de réglage suivant l'une quelconque des revendications 1, 2 et 3, caractérisé par le fait que pour ne pas avoir recours à une mesure d'épaisseur ou de planéité, on asservit le piston du vérin (14b) choisi pour la régulation d'épaisseur à une valeur de référence introduite manuellement et on modifie la pression dans les vérins (14) pour faire coïncider l'inclinaison et la forme de la génératrice de contact avec une inclinaison et une forme choisie en fonction des corrections de profil à réaliser.

5. Procédé de réglage suivant l'une quelconque des revendications 1, 2, 3 et 4, dans le cas où, pour équilibrer des efforts de laminage importants, l'enveloppe (16) du cylindre (8) est maintenue par au moins trois ensembles espacés axialement, de deux vérins (14) dont les chambres (24) et les pistons (25) dirigés radialement font un angle aigu α, caractérisé par le fait qu'on calcule la position d'un vérin unique équivalent aux deux vérins (14), au niveau de chacun des ensembles de deux vérins (14) à partir des positions des pistons (25) des vérins (14) et de l'angle α et qu'on utilise cette position du piston d'un vérin équivalent en remplacement de la position des pistons (25) des vérins (14), les deux vérins de chaque ensemble étant alimentés constamment en fluide à la même pression.

## Claims

1. Method for regulating, during rolling, the thickness and the contour of a rolled product, such as a metal sheet or a strip, in a roll stand comprising at least one cylinder (8) consisting of a fixed support (15) supported on the frame (2) of the roll stand and a tubular envelope (16) in contact with the rolled product (1) or with another cylinder (5) along a contact generatrix (18), mounted so as to be rotatable about the fixed support (15) and the internal diameter of which is such that a space is provided between the support (15) and the envelope (16), which is maintained against the rolling forces by at least three jacks (14) spaced along the axial direction of the cylinder corresponding to the transverse direction of the rolled product (1) and each comprising a chamber (24) integral with the fixed support (15) and a radially directed piston (25) constituting, at its end directed towards the internal surface of the envelope (16) of the cylinder, at least one chamber receiving the pressurized fluid of the jack (14) in order to form a film of oil permitting the rotation of the envelope (16) by sliding on this film, in which process the pressure of the fluid in each one of the jacks (14), the speed of rotation of the cylinder (8), the flatness of the rolled product (1) in the transverse direction and the thickness of the rolled product (1) in a zone situated transversely at a certain distance from the edges of the flat product (1) are continuously measured, characterized in that, in a continuous manner during the rolling of the rolled product (1) :

the position of the pistons (25) of each one of the jacks (14) is measured,

the position of the piston of the jack (14b) disposed closest to the thickness measurement zone (10) is automatically controlled in accordance with the thickness measurement,

the pressure of the fluid in the other jacks (14a, 14c, 14d, 14e) is automatically controlled in accordance with the pressure of the jack (14b), the position of which is automatically controlled,

the position of the two jacks (14a) and (14e) situated in extreme transverse positions is compared, in order to determine the deflection of the cylinder (8),

the pressure in the jacks (14) is modified in such a manner as to bring the deflection to a reference value determined by the transverse flatness measurement,

the deformation of the fixed support (15) is calculated from the pressures measured in each one of the jacks (14) and from the mechanical and dimensional characteristics of the fixed support (15),

the form of the contact generatrix (18) of the cylinder is determined from the deformation of the fixed support (15) and from the position of the pistons (25) of the jacks (14),

and the pressure in the jacks (14) is modified in order to cause the form of this contact generatrix (18) to coincide with a reference form determined from the transverse flatness measurement.

2. Regulating method according to claim 1, characterized in that the thickness of the pressurized fluid film between each one of the pistons (25) of the jacks (14) and the envelope (16) of the cylinder (8) is also calculated, as a function of the speed of rotation of the cylinder (8) and of the pressure of the fluid in the corresponding jack (14), and in that this calculated value of the thickness of the fluid film is taken into account for the automatic control of the position of the jack (14b) situated closest to the zone (10) of measurement of the thickness of the rolled product (1) and for the determination of the form of the contact generatrix (18) of the cylinder (8).

3. Regulating method according to either one of claims 1 and 2, characterized in that the yield of the roll stand comprising the cylinder (8) is also calculated, and in that this calculated value of the yield is taken into account for the automatic control of the position of the jack (14b) situated closest to the zone (10) of measurement of the thickness of the rolled product (1).

4. Regulating method according to any one of claims 1, 2 and 3, characterized in that, in order not to rely on a thickness and flatness measurement, the piston of the jack (14b) selected for the regulation of thickness is automatically controlled in accordance with a reference value which is introduced manually, and the pressure in the jacks (14) is modified in order to cause the inclination and the form of the contact generatrix to coincide with an inclination and the form selected as a function of the contour corrections to be carried out.

5. Regulating method according to any one of claims 1, 2, 3 and 4, wherein, in order to balance large rolling forces, the envelope (16) of the cylinder (8) is maintained by at least three axially spaced assemblies of two jacks (14), the chambers (24) and the radially directed pistons (25) of which form an acute angle α, characterized in that the position of a single jack equivalent to the two jacks (14) at the location of each one of the assemblies of two jacks (14) is calculated from the positions of the pistons (25) of the jacks (14) and from the angle α, and in that use is made of this position of the piston of an equivalent jack in substitution for the position of the pistons (25) of the jacks (14), the two jacks of each assembly being constantly supplied with fluid at the same pressure.

**Patentansprüche**

1. Verfahren zur Regelung der Dicke und des Profils eines Walzerzeugnisses, wie zum Beispiel eines Bleches oder eines Bandmaterials, während des Walzens in einem Walzgerüst, das wenigstens einen Zylinder (8) trägt, der durch einen an der Ständereinrichtung (2) des Walzgerüstes gelagerten festen Stützkörper (15) und einer Rohrhülle (16) gebildet ist, die sich dem Walzerzeugnis (1) oder mit einem anderen Zylinder (5) entlang einer Kontakterzeugenden (18) in Kontakt befindet und um den festen Stützkörper (15) drehend montiert ist und einen solchen Innendurchmesser aufweist, daß zwischen dem Stützkörper (15) und der Rohrhülle (16) ein Abstand geschaffen ist, wobei die Rohrhülle durch wenigstens drei Druckzylinder (14) gegen die Walzkräfte gehalten wird, die entlang der Axialrichtung des Zylinders entsprechend der Querrichtung des Walzerzeugnisses voneinander beabstandet sind und je eine am festen Stützkörper (15) fest angeordnete Kammer (24) und einen radial ausgerichteten Kolben (25) tragen, der an seinem gegen die Innenfläche der Rohrhülle (16) gerichteten Ende wenigstens eine Kammer aufweist, die das unter dem Druck des Druckzylinders (14) befindliche Fluid aufnimmt, um einen Ölfilm zu bilden, der die Rotation der Rohrhülle (16) durch Gleiten auf diesem Film erlaubt, wobei man bei dem Verfahren ständig den Fluiddruck in jedem der Druckzylinder (14), die Rotationsgeschwindigkeit des Zylinders (8), die Ebenheit des Walzerzeugnisses (1) in Querrichtung und die Dicke des Walzerzeugnisses in einer Zone mißt, die um eine gewisse Distanz quer zu den Rändern des Walzerzeugnisses liegt, dadurch gekennzeichnet, daß man während des Walzens des Erzeugnisses (1) fortlaufenderweise :

die Position des Kolbens (25) jedes Druckzylinders (14) mißt,

die Position des Kolbens des Druckzylinders (14b), der der Dickenmeßzone (10) am nächsten liegt, auf das Maß der Dicke einregelt,

den Fluiddruck in den anderen Druckzylindern (14a, 14c, 14d, 14e) auf den Druck des in Position eingeregelten Druckzylinders (14b) einregelt,

die Position der beiden Druckzylinder (14a und 14e), die sich an den äußersten Querstellen befinden, vergleicht, um das Wippen des Zylinders (8) zu bestimmen,

den Druck der Druckzylinder (14) derart verändert, um das Wippen auf einen Bezugswert zurückzuführen, der durch das Maß der Querebenheit bestimmt ist,

die Deformation des festen Stützkörpers (15) ausgehend von den Drücken, die in jedem Druckzylinder (14) gemessen werden, und die mechanischen und dimensionsmäßigen Kennwerte des festen Stützkörpers (15) berechnet,

die Form der Kontakterzeugenden (18) des Zylinders bestimmt, und zwar ausgehend von der Deformation des festen Stützkörpers (15) und der Stellung des Kolbens (25) der Druckzylinder (14),

und den Druck in den Druckzylindern (14) verändert, um die Form dieser Kontakterzeugenden (18) mit einer Bezugsform in Übereinstimmung zu bringen, die durch das Maß der Querebenheit bestimmt ist.

2. Verfahren nach Anspruch 1, dadurch gekennzeichnet, daß man des weiteren die Dicke des Fluidfilms unter dem Druck zwischen jedem Kolben der Druckzylinder (14) und der Rohrhülle (16) des Zylinders (8) als Funktion der Rotationsgeschwindigkeit des Zylinders (8) und des Fluiddrückes in den entsprechenden Druckzylindern (14) berechnet und daß man den so berechneten Dickenwert des Fluidfilmes für die Einregelung der Position des Druckzylinders (14b), der sich am nächsten zur Dickenmeßzone (10) des Walzerzeugnisses (1) befindet, und für die Bestimmung der Form der Kontakterzeugenden (18) des Zylinders (8) verwendet.

3. Verfahren nach Anspruch 1 oder 2, dadurch gekennzeichnet, daß man des weiteren die Durchbiegung des den Zylinder (8) tragenden Walzgerüstes berechnet und daß man den berechneten Wert der Durchbiegung für die Positionssteuerung des am nächsten zur Dickenmßzone (10) des Walzerzeugnisses (1) gelegenen Druckzylinders (14b) verwendet.

4. Verfahren nach Anspruch 1, 2 oder 3, dadurch gekennzeichnet, daß man, um nicht ein Maß der Dicke und der Ebenheit zu benutzen, den Kolben des für die Dickenregelung ausgewählten Druckzylinders (14b) auf einen manuell eingeführten Bezugswert folgesteuert und daß man den Druck in den Druckzylindern (14) verändert, um die Neigung und einer Form in Übereinstimmung zu bringen, die als Funktion der zu verwirklichenden Profilkorrekturen gewählt sind.

5. Verfahren nach Anspruch 1, 2, 3 oder 4, wobei in dem Fall, wo das Hüllrohr (16) des Zylinders (8) zwecks Ausgleichs der wichtigen Walzkräfte von wenigstens drei axial beabstandeten Einheiten aus zwei Druckzylinders (14) gestützt wird, deren radial ausgerichtete Kammern (24) und Kolben (25) einen spitzen Winkel α einschließen, dadurch gekennzeichnet, daß man die Position eines einzigen Druckzylinders, der den beiden Druckzylindern (14) äquivalent ist, bei dem Niveau jeder Einheit aus zwei Druckzylindern (14) von den Positionen der Kolben (25) der Druckzylinder (14) und des Winkels α berechnet und daß man diese Position des Kolbens eines äquivalenten Druckzylinders als Ersatz für die Position der Kolben (25) der Druckzylinder (14) verwendet, wobei die beiden Druckzylinder jeder Einheit stets mit Fluid desselben Druckes versorgt werden.

# Fig1

1  14e  4  12

14a  A  2  10

# Fig 2

16  15
17  8
18  14b
5  10  12
1  6
9

Fig 3a

Fig 3

Fig 5

0 140 776

2

# Fig 4

0 140 776